Europäisches Patentamt

European Patent Office

Office européen des brevets

(19)

(11) Publication number: **0 082 556**
**B1**

## (12) EUROPEAN PATENT SPECIFICATION

(45) Date of publication of patent specification: **13.08.86**

(51) Int. Cl.⁴: **G 01 C 1/08**

(21) Application number: **82201570.7**

(22) Date of filing: **09.12.82**

(54) Sextant.

(30) Priority: **14.12.81 NL 8105610**

(43) Date of publication of application:
**29.06.83 Bulletin 83/26**

(45) Publication of the grant of the patent:
**13.08.86 Bulletin 86/33**

(84) Designated Contracting States:
**AT BE CH DE FR GB IT LI LU NL SE**

(56) References cited:
**DE-C- 836 104
GB-A- 719 151
US-A-2 385 978
US-A-4 279 463**

(73) Proprietor: **Nieuwe Rotterdamsche
Instrumentenfabriek Observator B.V.
Steenhouwerstraat 15
NL-3194 AG Rotterdam-Hoogvliet (NL)**

(72) Inventor: **van Santen, Andries
Wilgenhoek 3
NL-2906 AJ Capelle a/d IJssel (NL)**

(74) Representative: **de Vries, Johannes Hendrik
Fokke et al
Octrooibureau Los en Stigter B.V. P.O. Box
20052
NL-1000 HB Amsterdam (NL)**

Courier Press, Leamington Spa, England.

## Description

The invention relates to a sextant as described in the preamble of claim 1.

Such a sextant is mainly used for determining the position of a ship at sea. To this end, the height of a celestial body with respect to the horizon is determined by means of the sextant, which information together with Greenwich-time gives an indication for the position determination of the ship at sea. Normally, the sun is chosen as celestial body. In order to be able to observe the sun and to supporess the possible overshining of the horizon, said filter means are disposed which can be placed in the beam path of the image of the sun entering through both said mirrors and in the beam path of the directly entering image of the horizon, respectively. At the prior art sextant these filter means each are made as a set of glass filters, wherein the filter set for observing the sun is mounted on the frame between the two mirrors, whereas the filter set for the observing the horizon is mounted on the frame in alignment with the optical axis of the viewing means behind the first mirror. The filter set for observing the sun usually consists of four filter glasses mounted in holders, while the filter set for observing the horizon usually consists of three of such filter glasses. As the planparallelism of these filter glasses also determines the accuracy of the angle measuring to be performed with the sextant, these filter glasses should have a high planparallel quality, whereby the cost-price of these filter glasses is relatively high. Moreover, in consequence of the mounting of the filter glasses on the frame, these filter glasses are rather vulnerable, while the filter glasses further easily become filthy. Further, many undesired reflections can occur at the prior art sextant as a result of the high number of glass surfaces. Finally, the placing of the filter glasses in the respective beam paths of the two images results in practice in a relatively high masking of the operative surface of the mirrors.

US—A—2.385.978 discloses an optical instrument, i.e. an octant or a sextant, wherein two filter discs are rotatably mounted within the housing of the instrument. The first filter disc is mounted in the optical path intermediate an index prism and the objective of the instrument and comprises only two separate filters. The second filter disc is mounted in the ocular tube in the same optical path and comprises just one filter.

DE—C—836.104 relates to a screening means for a sextant, wherein a filter is used consisting of a film with an increasing blackening in the longitudinal direction.

The invention aims to provide a sextant of the type as described in the preamble of claim 1 having a relatively simple construction, wherein a continuous adjustment of the filters is possible so that a large range of light circumstances can be handled.

To this end, the sextant according to the invention is characterized in that said filter means are accommodated within said viewing means, each filter means consisting of a filter holder rotatably mounted in the housing of the viewing means, in that each filter means includes a filter strip with a varying shading, said filter being disposed in an arcuate portion of the respective filter holder, which arcuate portion is movable along the ocular lens of the viewing means, in that each filter means includes a free aperture, which can be placed in the corresponding beam path and in that each of the filter holders is rotatably borne in the opposite side walls of the housing of the viewing means by means of a respective axle concentric with the axis of the arcuate portion, each said axle protruding outside of the housing and functioning as operating member, a separating plate being mounted in the housing of the viewing means, which separating plate extends from the filter means upto the objective lens.

In this manner it is attained that the filter means lie outside those parts of the beam path of the two images, which affect the accuracy of the angle measuring so that it is not required that the filter means have a high planparallel quality. Thereby, the cost-price of the filter means is substantially reduced. Further, the filter means lie within the viewing means so that substantially no filthiness occurs and the quality of the image remains optimum, while the sextant is less vulnerable. Moreover, the number of glass surfaces of the sextant according to the invention is much lower so that substantially no undesired reflections can occur and a maximum light shielding is reached, whereby a still image free of relections is obtained. The masking of the operative surface of the mirrors, as occurs at the prior art sextant is avoided at the sextant according to the invention. A good filter adjustment appears to be possible under diverging light circumstances.

The separating plate prevents that undesired unfiltered sunlight arrives in the beam path of the image of the observation of the horizon.

The invention will be further explained by reference to the drawings, in which an embodiment of the sextant according to the invention is shown.

Fig. 1 shows a top view of an embodiment of the sextant according to the invention.

Fig. 2 is a cross-section according to the line II—II of Fig. 1, wherein only the viewing means of the sextant is shown.

Fig. 3 is a cross-section according to the line III—III of Fig. 2.

Fig. 4 is a cross-section according to the line IV—IV of Fig. 3.

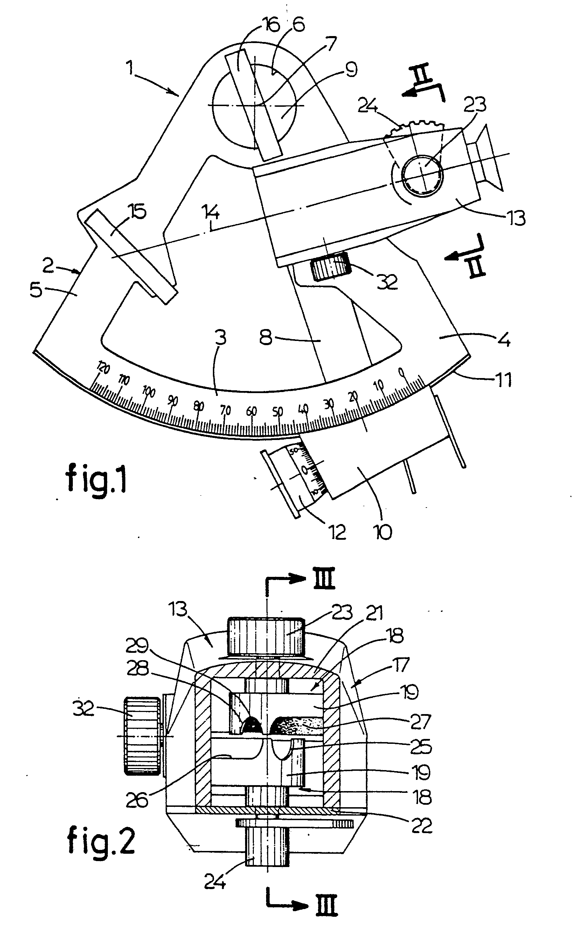

Fig. 1 shows a sextant 1 comprising a frame 2 with a circular arc portion 3. The ends of the circular arc portion 3 merge into substantially radially extending arms 4, 5 which merge into each other at their ends and enclose a circular opening 6, the centre 7 of which also forms the centre of the circular arc portion 3. A measuring arm 8 is pivotably mounted with its first end 9 in the opening 6, while the other end carries a housing 10. A worm shaft (not shown in the drawings) is accommodated in the housing 10, said worm shaft cooperating with a schematically shown toothing 11 of the circular arc portion 3. An angle can be read off from the circular arc portion 3, wherein a sub-division can be read off from a reading cylinder 12 coupled with the worm shaft.

A monocular viewing means 13 is mounted on the arm 4, while a fixed mirror 15 is disposed on the opposite arm 5 in alignment with the optical axis 14. The mirror 15 cooperates with a second mirror 16 mounted on the end 9 of the measuring arm 8 so that the mirror 16 rotates with the measuring arm 8. The mirror 16 extends radially. The mirror 15 is adapted so that an image directly entering along the optical axis 14 of the viewing means 13 and an image entering through both said mirrors 15, 16 combine in the viewing means 13. To this end, the mirror 15 can consist, for example, in the usual manner of a transparent half directed away from the arm 5 and a reflective half-adjacent the arm 5 and cooperating with the mirror 16. Preferably, the height of the mirror 15 is adapted so that the beam path of the directly entering image passes over the mirror.

The sextant 1 described can be used in the usual manner as an angle measuring instrument for determining the position of a ship at sea. To this end, the height of celestial body with respect to the horizon should be determined. This information in combination with Greenwich-time gives an indication for the position of the ship at sea. The height of the celestial body is determined by making the image of the celestial body to coincide with the image of the horizon through moving the measuring arm 8 during observation through the monocular viewing means 13. This height can be read off from the circular arc portion 3 and the reading cylinder 12.

Usually, the sun is chosen as celestial body. In order to be able to do a sun observation, filter means are required, which have to be able to independently filter both the image of the sun and the image of the horizon. According to the invention these filter means are accommodated in the housing 17 of the viewing means 13 at the sextant 1. Thereby it is reached that the filter means substantially do not affect the accuracy of the angle measurement so that a high planparallel quality is not required for the filter means.

The viewing means 13 is shown in detail in Fig. 2—4. As shown in these figures, each of the filter means comprises a filter holder 18, which consists of an arcuate portion 19 and an axis concentric with the arcuate portion 19. The filter holders are rotatably borne with their axle (axis) 20 in the opposite side walls 21, 22 of the housing 17 of the viewing means 13. The axis protrude outside of the housing 17 of the viewing means 13 and carry an operating knob 23, 24 respectively, by means of which the filter holders 18 are rotatable. The operating knob 23 directed away from the arm 4 of the frame 2 is used for the adjustment of the filter holder 18 lying in the beam path of the directly entering image, while the operating knob 24 lying at the side of the arm 4 is used for the adjustment of the filter holding 18 lying in the beam path of the image entering through the mirrors 15, 16.

In the arcuate portion 19 of each filter holder 18 three openings distributed over the circumference are formed, wherein a first relatively small opening forms a free aperture 25 followed by a second opening 26 extending along a larger part of the circumference and in which a schematically indicated filter strip 27 is disposed. For the sake of clearness the filter strip 27 is schematically shown only for the upper filter holder 18. The opening 26 is followed by a third opening 28 corresponding with the free aperture 25, in which opening 28 a schematically indicated filter 29 is disposed. The filter strip 27 has a varying shading, wherein preferably a colour shading continuously increasing from light yellow through orange red to dark grey, starting at the aperture 25 is used. As filter strip 27 a strip of film material, for example colour transparency film, can be used. In order to realise also a suitable filtering under the most extreme light circumstances, the filter 29 is disposed in the opening 28, which filter 29 has a stronger black shading than can be attained with the film material used. Because only a short interruption is present between the filter strip 27 and the filter 29, and the free aperture 25, respectively, a uniform change of completely transparent to dark appears to be observed in practice. The viewing means 13 shown comprises an ocular lens 30 and an assembled objective lens 31. The viewing means 13 can be focused by displacing the object lens 31 by means of an operating knob 32.

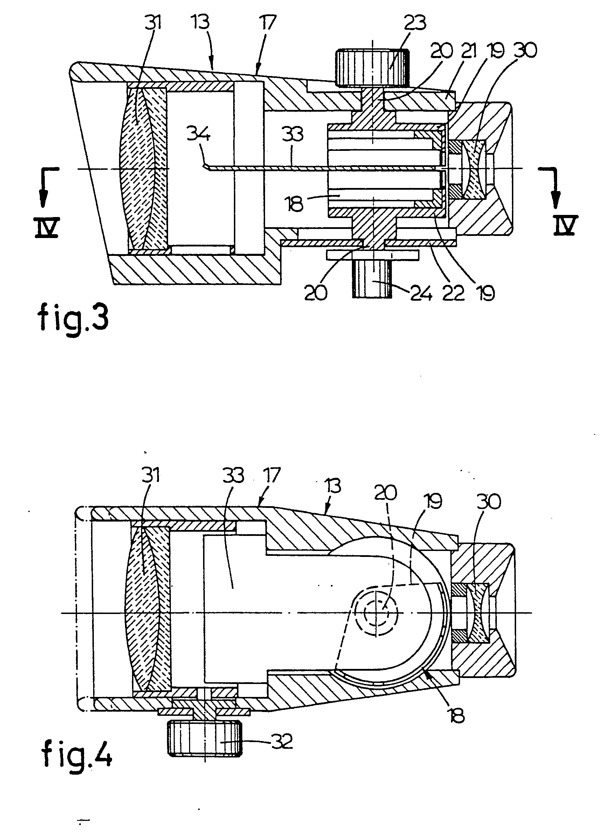

As shown in particular in Fig. 3 and 4, the arcuate portions 19 of the filter holders 18 lie adjacent the ocular lens 30 of the viewing means 13 so that the filter strips 27 and the filters 29 are movable through the beam path of the respective images. Thereby, a continuous adjustment without steps of the filtering is possible. If the free aperture 25 lies in the beam path, no filtering occurs.

To establish a complete separation between both images, a separating plate 33 is mounted in the housing 17 of the viewing means 13, which separating plate 33 extends from the filter holders 18 to the vicinity of the objective lens 31. As shown in Fig. 3, the end 34 of the separating plate 13 lying adjacent the objective lens 31 is bent in the direction of the beam path of the directly entering image. In this manner, it is prevented that undesired unfiltered sunlight arrives in the beam path of the horizon observation.

With respect to the prior art sextant with two sets of filter glasses, the sextant 1 described shows a number of important advantages. First, a high planparallel quality for the filter strips 27 and the filters 29 is not required so that they can be very cheap. Further, a continuous adjustment without any steps of the filtering from completely transparent to dark is possible. Because the filter strips 27 and the filters 29 are accommodated in the housing 17 of the viewing means 13, filthiness of these parts does not occur in a substantial way so that the image quality will not decrease. Undesired reflections can not occur anymore, because a maximum light protection is attained so that a still image free of reflections is obtained. Moreover, the operative surface of the mirrors of the sextant 1 is not partially masked by placing the filter strips 27 or the filters 29 in the beam path of the images so that the complete image size remains free for the observation. As a result of the missing filter glasses the sextant is substantially less vulnerable than the prior art sextant, while, moreover, a very compact construction is possible.

### Claims

1. Sextant (1), comprisng a frame (2) with a circular arc portion (3) and a measuring arm (8) pivotably mounted with one end (9) in the center (7) of the circular arc portion, the other end of said measuring arm being movable along the circular arc portion, a monocular viewing means (13) mounted on the frame, and a first fixed mirror (15) disposed on the frame in alignment with the optical axis (14) of said viewing means and cooperating with a second rotatable mirror (16), said second mirror being mounted at that end of the measuring arm, which lies in said center, said second mirror extending radially, wherein said first mirror is adapted so that a directly entering image and an image entering through both said mirrors combine in the viewing means, wherein two filter means are provided, which can be placed in the respective beam paths of both said images, characterized in that said filter means are accommodated within said viewing means, each filter means consisting of a filter holder (18) rotatably mounted in the housing (17) of the viewing means (13), in that each filter means includes a filter strip (27) with a varying shading, said filter strip being disposed in an arcuate portion (19) of the respective filter holder, which arcuate portion is movable along the ocular lens (30) of the viewing means, in that each filter means includes a free aperture (25), which can be placed in the corresponding beam path and in that each of the filter holders (18) is rotatably borne in the opposite side walls (21, 22) of the housing of the viewing means by means of a respective axle (20) concentric with the axis of the arcuate portion, each said axle protruding outside of the housing and functioning as operating member, a separating plate (33) being mounted in the housing of the viewing means, which separating plate extends from the filter means upto the objective lens (31).

2. Sextant according to claim 1, characterized in that the end (34) of the separating plate (33) adjacent the objective lens (31) is bent in the direction of the beam path of the directly entering image.

3. Sextant according to claim 1 or 2 characterized in that each filter strip (27) has a continuously varying colour shading.

### Revendications

1. Sextant (1), comprenant un bâti (2) avec une partie (3) en arc de cercle et un bras (8) de mesure monté de façon pivotante, à une première extrémité (9), sur la centre (7) de la partie en arc de cercle, l'autre extrémité dudit bras de mesure étant mobile le long de la partie en arc de cercle, des moyens de visée monoculaire (13) montés sur le bâti, et un premier miroir fixe (15) disposé sur le bâti en alignement avec l'axe optique (14) desdits moyens de visée et coopérant avec un second miroir tournant (16), ledit second miroir étant monté à l'extrémité du bras de mesure qui est située audit centre, ledit second miroir s'étendant radialement, ledit premier miroir étant conçu de manière qu'une image arrivant directement et qu'une image arrivant par l'intermédiaire des deux miroirs se combinent dans les moyens de visée, deux moyens filtrants étant prévus et pouvant être placés sur les trajets lumineux respectifs des deux images, caractérisé en ce que lesdits moyens filtrants sont logés à l'intérieur desdits moyens de visée, chaque moyen filtrant comprenant un porte-filtre (18) monté de façon rotative dans le corps (17) des moyens de visée (13), en ce que chaque moyen filtrant comprend une bande filtrante (27) à obscurcissement variable, ladite bande filtrante étant disposée dans une partie courbe (19) du porte-filtre respectif, laquelle partie courbe est mobile le long de l'oculaire (30) des moyens de visée, en ce que chaque moyen filtrant présente une ouverture libre (25) qui peut être placée sur le trajet lumineux correspondant et en ce que chacun des porte-filtres (18) est porté de façon rotative dans les parois latérales opposées (21, 22) du corps des moyens de visée à l'aide d'un tourillon respectif (20) centré sur l'axe de la partie courbe, chaque tourillon dépassant vers l'extérieur du corps et assumant la fonction d'un élément de manoeuvre, une plaque (33) de séparation étant montée dans le corps des moyens de visée, laquelle plaque de séparation s'étend des moyens filtrants jusqu'à l'objectif (31).

2. Sextant selon la revendication 1, caractérisé en ce que l'extrémité (34) de la plaque (33) de séparation, adjacente à l'objectif (31), est pliée dans la direction du trajet lumineux de l'image arrivant directement.

3. Sextant selon la revendication 1 ou 2, caractérisé en ce que chaque bande filtrante (27) présente un obscurcissement de couleur variant en continu.

### Patentansprüche

1. Sextant (1) mit einem Rahmen (2) mit einem Kreisbogenabschnitt (3), einem Meßarm (8), der mit einem Ende (9) im Krümmungsmittelpunkt (7) des Kreisbogenabschnittes schwenkbar befestigt ist und dessen anderes Ende entlang des Kreisbogenabschnittes bewegbar ist, einer monokularen Betrachtungseinrichtung (13), die auf dem Rahmen angebracht ist, und einem ersten ortsfesten Spiegel (15), der auf dem Rahmen auf die optische Achse (14) der Betrachtungseinrichtung ausgerichtet angeordnet ist und mit einem zweiten drehbaren Spiegel (16) zusammenwirkt, der an demjenigen Ende des Meßarmes angebracht ist, welches in dem Krümmungsmittelpunkt liegt, und sich radial erstreckt, wobei der erste Spiegel derart eingerichtet ist, daß ein direkt eintretendes Bild und ein durch beide Spiegel eintretendes Bild in der Betrachtungseinrichtung kombiniert werden, wobei zwei Filtereinrichtungen vorgesehen sind, die in den jeweiligen Strahlengang beider Bilder plazierbar sind, dadurch gekennzeichnet, daß die Filtereinrichtungen in der Betrachtungseinrichtung aufgenommen sind und jeweils einen Filterhalter (18) aufweisen, der in dem Gehäuse (17) der Betrachtungseinrichtung (13) drehbar befestigt ist, daß jede Filtereinrichtung einen Filterstreifen (27) mit variierender Schattierung aufweist, der in einem bogenförmigen Abschnitt (19) des jeweiligen Filterhalters angeordnet ist, wobei der bogenförmige Abschnitt entlang der Okularlinse (30) der Betrachtungseinrichtung bewegbar ist, daß jede Filtereinrichtung eine freie Öffnung (25) aufweist, die in den entsprechenden Strahlengang plazierbar ist, und daß jeder der Filterhalter (18) in den gegenüberliegenden Seitenwänden (21, 22) des Gehäuses der Betrachtungseinrichtung mittels einer entsprechenden Achse (20) drehbar gelagert ist, die mit der Achse des bogenförmigen Abschnittes konzentrisch ist und aus dem Gehäuse herausragt und als Betätigungsteil dient, wobei in dem Gehäuse der Betrachtungseinrichtung eine Unterteilungsplatte (33) angebracht ist, welche sich von der Filtereinrichtung zu der Objektivlinse (31) hin erstreckt.

2. Sextant nach Anspruch 1, dadurch gekennzeichnet, daß das der Objektivlinse (31) benachbarte Ende (34) der Unterteilungsplatte (33) zu dem Strahlengang des direkt eintretenden Bildes hin abgebogen ist.

3. Sextant nach Anspruch 1 oder 2, dadurch gekennzeichnet, daß jeder Filterstreifen (27) eine sich kontinuierlich ändernde Farbschattierung aufweist.

0 082 556

fig.1

fig.2

1

0 082 556

fig.3

fig.4